# EUROPÄISCHE PATENTSCHRIFT

(11) **EP 2 092 626 B1**
(45) Veröffentlichungstag und Bekanntmachung des Hinweises auf die Patenterteilung: **25.07.2018**
(21) Anmeldenummer: 07819650.8
(22) Anmeldetag: 07.11.2007
(51) Int. Cl.: H02J 5/00, H01F 38/14

(54) **ELEKTRISCHER VERBRAUCHER, SYSTEM UND VERFAHREN**
ELECTRIC CONSUMER, SYSTEM AND METHOD
RÉCEPTEUR ÉLECTRIQUE, SYSTÈME ET PROCÉDÉ

(30) Priorität: 13.11.2006 DE 102006053682
(43) Veröffentlichungstag der Anmeldung: 26.08.2009
(73) Patentinhaber: SEW-EURODRIVE GmbH & Co. KG, 76646 Bruchsal (DE)
(72) Erfinder: SCHMIDT, Josef, 76676 Graben-Neudorf (DE)
(86) Internationale Anmeldenummer: PCT/EP2007/009638
(87) Internationale Veröffentlichungsnummer: WO 2008/058662

(56) Entgegenhaltungen:
- WO-A-94/09544
- DE-A1- 10 360 599
- DE-A1-102005 022 367
- US-A1- 2001 035 734

## Beschreibung

Die Erfindung betrifft einen **elektrischen** Verbraucher, ein System **und ein Verfahren.**

In industriellen Anlagen ist bekannt, elektrische Verbraucher, wie beispielsweise elektronische Geräte, Beleuchtungsvorrichtungen, Antriebe, Maschinen und dergleichen, aus einem Netz galvanisch zu versorgen, insbesondere mit Wechselstrom von 50 oder 60 Hz. Dazu sind die Verbraucher meist mittels kostspieliger Steckverbinder mechanisch angeschlossen und elektrisch verbunden. Außerdem weist eine solche Anlage oder Maschine meist für jeden Antrieb ein T-Stück als Energieabzweigung auf. Diese T-Stücke sind aufwendig zu installieren und kostspielig, besonderes wenn sie in hoher Schutzart für den Nassbereich oder gar den aseptischen Bereich einsetzbar sein müssen. Diese T-Stücke werden auch als Verteilerkästen bezeichnet und umfassen oft auch weitere Vorrichtungsteile, wie beispielsweise Notaus-Schalter. Somit sind sie aufwendig und kostspielig, insbesondere auch hinsichtlich der Installation.

Aus der DE 103 60 604 ist ein System und ein Verbraucher zur berührungslosen Versorgung bekannt.

Aus der US 2001/035734 A1 ist als näüchstliegender Stand der Technik ein Ladungskoppler bekannt.

Aus der DE 103 60 599 A1 ist eine Anlage mit induktiv versorgten Antrieben bekannt.

Aus der WO 94/09544 A ist ein kontaktloses Batterieladesystem bekannt.

Aus der DE 10 2005 022 367 A1 ist ein induktiv versorgbarer Verbraucher und ein **entsprechendes System bekannt.**

Der Erfindung liegt daher die Aufgabe zugrunde, eine einfachere und kostengünstigere Verkabelung bei elektrischen Verbrauchern und Anlagen zu schaffen.

Erfindungsgemäß wird die Aufgabe bei dem elektrischen Verbraucher nach den in Anspruch 1 und bei dem System nach den in Anspruch 4 und bei dem Verfahren nach den in Anspruch 7 angegebenen Merkmalen gelöst.

Wichtige Merkmale der Erfindung bei dem elektrischen Verbraucher sind, dass er Mittel zu seiner induktiven Versorgung **aus einem Primärleiter** umfasst, wobei die Mittel ein Einschiebeteil umfassen, **dass lösbare mit dem Verbraucher verbunden ist,** wobei das Einschiebeteil Mittel zur zerstörungsfreien, **lösbaren** Aufnahme eines Abschnitts des Primärleiters aufweist. Von Vorteil ist dabei, dass die induktive Versorgung schnell, einfach und ohne aufwendige Stecker bereitstellbar ist. Insbesondere ist ein Abschnitt des Primärleiters als Abgriffspunkt für die induktive Versorgung zerstörungsfrei nutzbar. Das Einschiebeteil kann somit vom Primärleiter entfernt werden, ohne dass am Primärleiter Spuren des Abgriffs verbleiben.

Wichtige Merkmale der Erfindung bei dem elektrischen Verbraucher **sind alternativ oder zusätzlich,** dass er ein Gehäuseteil mit gehäusebildender Funktion für einen Elektromotor, ein Getriebe und eine den Elektromotor versorgende elektronische Schaltung umfasst, wobei die Rotorwelle des Elektromotors und die Abtriebswelle des Getriebes im Gehäuseteil gelagert sind, insbesondere im selben, und wobei ein Aufnahmebereich vorgesehen ist, der eine Sekundärwicklung umfasst zur berührungslosen Energieversorgung, insbesondere in schwacher Kopplung in Resonanz, wobei in den Aufnahmebereich ein Einschiebeteil einschiebbar ist, das einen Primärleiter zumindest teilweise umfasst, wobei die induktive Kopplung zwischen Primärleiter und Sekundärwicklung durch Einschieben des Einschiebeteils herstellbar ist. Somit ist eine schnelle Verbindung und Trennung mit dem versorgenden System möglich. Es müssen keine elektrischen freiliegenden Kontakte verwendet werden. Außerdem ist das Einschiebeteil aus Kunststoff kostengünstig herstellbar.

Die Mittel zur induktiven Versorgung umfassen dabei eine an ein Primärleitersystem induktiv gekoppelte Sekundärspule, welche insbesondere zur Bildung eines Schwingkreises derart mit einer Kapazität in Reihe oder parallel beschaltet ist, dass die zugehörige Resonanzfrequenz im Wesentlichen der mittelfrequenten Wechselstromfrequenz des Primärstromes entspricht. Von Vorteil ist dabei, dass der Strom in der Sekundärspule zwei Anteile aufweist. Ein erster ist der bei Transformatoren bekannte, übersetzte Stromanteil. Hinzu addiert sich ein Resonanz-Stromanteil, welcher durch die Schwingkreisanordnung bewirkt ist. Die Sekundärspule ist mit zumindest einer Kapazität in Serie und/oder parallel derart geschaltet, dass die Resonanzfrequenz der Mittelfrequenz im Wesentlichen entspricht. Auf diese Weise ist auch bei einer schwachen induktiven Kopplung, die beispielsweise bei großem Luftspalt zwischen Primärleiter und Sekundärleiter auftritt, ein hoher Wirkungsgrad bei der Übertragung gesichert. Die Schwingkreisanordnung ermöglicht die Übertragung der Energie über einen großen Luftspalt. In die Primärleitung wird ein im Wesentlichen konstanter mittelfrequenter Wechselstrom eingeprägt, insbesondere durch eine Stromregelung im Wesentlichen unabhängig von der von den Verbrauchern entnommenen Leistung. Die Mittel zur induktiven Versorgung umfassen bei einer vorteilhaften Weiterbildung einen oder mehrere Kondensatoren, der oder die mit einer den Verbraucher versorgenden Sekundärspule derart seriell und/oder parallel beschaltet ist oder sind, dass die entsprechende Resonanzfrequenz im Wesentlichen der Mittelfrequenz entspricht. Von Vorteil ist dabei, dass ein großer Luftspalt zwischen Primärleiter und Sekundärspule realisierbar ist. Ein ferromagnetischer Kern zur Übermittlung des vom Primärleiter erzeugten magnetischen Feldes an die Sekundärspule ist durch die Abstimmung auf die Resonanzfrequenz verzichtbar. Zusammengefasst spricht man von der beschriebenen Art der berührungslosen Energieübertragung als Energieversorgung in schwacher Kopplung in Resonanz.

**Vorzugsweise ist der Primärleiter mit einem Wechselstrom mit einer im Wesentlichen konstanten Amplitude von 10A oder 60 A oder darüber und einer Frequenz von 10kHz oder darüber, beispielsweise 100kHz, gespeist.**

Von Vorteil bei der Erfindung ist, dass der Verbraucher dicht und in hoher Schutzart in kostengünstiger Weise ausführbar ist. Die berührungslose Versorgung des Verbrauchers ermöglicht nämlich, das Gehäuse einfach und schlicht, insbesondere ohne Unebenheiten oder Steckverbinder, auszuführen und somit ein Abfließen von Wasser zu ermöglichen sowie das Festsetzen von Feststoffen zu verhindern. Insbesondere ist der Verbraucher somit in Nassbereichen und aseptischen Bereichen einsetzbar. Die Zeit, welche für das Verkabeln notwendig ist, ist mit der Erfindung reduzierbar. Weiterhin werden Ableitströme, die bei konventioneller Steckerverkabelung auftreten, verhindert, so dass eine verbesserte elektromagnetische Verträglichkeit entsteht.

Weiter ist von Vorteil, dass die Einspeisung zu den Verbrauchern potentialfrei ist und die sonst in Anlagen vorhandene Potentialverschleppung sowie Funkentstörmittel bei Trennschaltern entfallen. Außerdem ist eine Blindleistungskompensation, insbesondere im Verbraucher, ermöglicht und somit weist der Wechselstrom kleinere Werte auf, weshalb dann auch kleinere Leitungsdurchmesser beim Primärleiter vorsehbar sind und somit geringere Verkabelungskosten erreichbar sind. Trennschalter sind entbehrlich, da ein Auftrennen durch ein Herausziehen des Primärleiters ersetzbar ist.

**Bei einer vorteilhaften Ausgestaltung ist am Gehäuse des Verbrauchers eine Ausnehmung ausgeformt, wobei die lösbare Verbindung des Einschiebeteils mit dem Verbraucher durch Einschieben des Einschiebeteils in die Ausnehmung hergestellt ist. Von Vorteil ist dabei, dass eine einfache Anschlussmöglichkeit des Verbrauchers an eine Energieversorgung bereitgestellt ist. Schalter und Steckerbinder sind somit verzichtbar.**

Bei einer vorteilhaften Ausgestaltung sind Einschiebeteil und Primärleiter lösbar verbindbar, und/oder das Einschiebeteil ist formschlüssig oder kraftschlüssig, insbesondere durch Klemmverbindung, mit dem Verbraucher verbindbar, insbesondere nach Einschieben **in eine Ausnehmung.** Somit ist vorteilhaft ein schnelles Anschließen des Verbrauchers durchführbar, **und das Einschiebeteil wird durch das Gehäuse des Verbrauchers zumindest teilweise abgeschirmt und gegen Beschädigung geschützt.**

Bei einer vorteilhaften Ausgestaltung ist das Einschiebeteil zumindest teilweise, insbesondere abschnittsweise, gehäusebildend für den Primärleiter. In einer Weiterbildung lässt sich das Einschiebeteil, insbesondere zum Einlegen und Herausnehmen des Primärleiters, öffnen und schließen. Somit ist die Verbindung zwischen Primärleiter und Einschiebeteil vorteilhaft herstellbar, und das Einschiebeteil bewirkt einen Schutz des Primäreiters beim Einschieben und stellt auf einfache Weise einen definierten Abstand zwischen Primärleiter im Einschiebeteil und Verbraucher her, so dass die berührungslose Energieversorgung des Verbrauchers unter definierten Bedingungen, insbesondere an die Geometrie und an die Materialeigenschaften am Abgriff erfolgen kann.

Bei einer vorteilhaften Ausgestaltung ist der Abschnitt des Primärleiters zur induktiven Versorgung durch bloßes Öffnen, Umsetzen und Schließen des Einschiebeteils verschiebbar. Die Verschiebung erfolgt vorteilhaft entlang des Primärleiters. Von Vorteil ist dabei, dass der Abschnitt des Primärleiters zerstörungsfrei zum Anschluss des Verbrauchers verwendbar ist, insbesondere dass die Isolation des Primärleiters beim Anschluss nicht zerstört wird. Es ist damit ein Umsetzen des Einschiebeteils vornehmbar. Somit ist eine neuer Verbraucher einfach in ein bestehendes Energieversorgungs-Netz integrierbar und es ist ein Verbraucher einfach aus einem bestehenden Energieversorgungs-Netz entfernbar. Auch ist ein Verbraucher einfach verschiebbar, **indem der für seine Versorgung erforderliche Abgriff an einer anderen Stelle und/oder in einem anderen Abschnitt des Primärleiters vorgesehen wird.**

Bei einer vorteilhaften Ausgestaltung umfasst das Einschiebeteil mindestens zwei Teilbereiche, die lösbar verbindbar sind. In Weiterbildung sind die beiden Teilbereiche in ihrer relativen räumlichen Lage zueinander veränderbar angeordnet, insbesondere klappbar und/oder drehbar und/oder verschiebbar. Somit ist das Einschiebeteil besonders einfach herstellbar, und das Öffnen und Schließen sowie das Herstellen der gehäusebildenden Funktion des Einschiebeteils ist besonders einfach erreichbar. In einer Alternative umfasst das Einschiebeteil mindestens zwei Teilbereiche, die über einem bieg- oder faltbaren Übergangsbereich **oder ein Scharnier** verbunden sind, um ein Klappen oder Falten zu ermöglichen. Diese beiden Teilbereiche mit dem Übergangsbereich sind in der Alternative einstückig ausgeführt.

Bei einer vorteilhaften Ausgestaltung ist der Primärleiter elektrisch isoliert gegen den Verbraucher. In einer Weiterbildung ist das Einschiebeteil aus Spritzguss, insbesondere Kunststoff-Spritzguss, gefertigt. Von Vorteil ist dabei, dass keine elektrischen Kontakte zugänglich sind und dass eine hohe Unempfindlichkeit gegen Staub, Schmutz und Feuchtigkeit gegenüber Umgebungseinflüssen erreichbar ist.

**Bei einer vorteilhaften Ausgestaltung ist das Einschiebeteil aus wärmeleitendem Kunststoff, insbesondere aus einem polymeren Matrixmaterial mit einem faserförmigen und/oder einem nicht-faserförmigen wärmeleitenden Füllstoff, gefertigt. Somit sind günstige Verhältnisse für die Entwärmung des Einschiebeteils erreicht. Die durch die induktive Kopplung, insbesondere durch mittelfrequente Ummagnetisierungen, erzeugte Abwärme kann durch das Einschiebeteil nach außen an die Umgebung oder an eine Kühlfläche abgeführt werden. Als wärmeleitende Faser ist beispielsweise eine Polyethylenfaser, eine Polypropylenfaser, eine Polyesterfaser, eine Polyallylsulfidfaser, eine Aramidfaser, eine Polyamidfaser und/oder eine Kohlenstofffaser verwendbar. Durch die Faserform ist vorteilhaft eine gerichtete Entwärmung bewirkbar. Als nicht-faserförmiger Füllstoff ist vorzugsweise ein Füllstoff mit sphärischer oder anderer unregelmäßiger Gestalt, der nicht durch Zermahlen von Fasern hergestellt st, verwendbar. Beispielsweise ist Füllstoff aus Aluminiumoxid, Bornitrid, Aluminiumnitrid, Siliciumcarbid und/oder Siliciumdioxid einsetzbar. Durch die Kombination von faserförmigen und nicht-faserförmigen Füllstoffen wird eine besonders gute Wärmeleitfähigkeit bei gleichzeitig günstigen Formgebungseigenschaften des Kunststoffmaterials erreicht.**

Bei einer vorteilhaften Ausgestaltung ist an das Einschiebeteil ein Schloss, umfassend Schlossbügel, formschlüssig verbindbar, wobei für das Lösen des Schlosses vom Einschiebeteil ein Schlüssel notwendig ist. Insbesondere ist **am Einschiebeteil** eine Bohrung vorgesehen für den Schlossbügel des Schlosses. Vorteiligerweise ist nur ein beabsichtigtes und befugtes Lösen der Versorgung vom Verbraucher ausführbar. Das Lösen des Schlosses umfasst insbesondere ein Öffnen des Schlosses und ein Entfernen des geöffneten Schlosses.

Bei einer vorteilhaften Ausgestaltung ist das Einschiebeteil mit dem Verbraucher mit derartigen Mitteln verbindbar, dass dabei die Verwendung eines Werkzeuges notwendig ist. Vorteiligerweise ist nur ein beabsichtigtes Lösen der Versorgung vom Verbraucher ausführbar. Als derartige Mittel sind beispielsweise Schrauben und/oder Muttern mit besonderer, nicht standard- oder normgemäßer Ausbildung der Werkzeugaufnahme für die Betätigung der Schraube und/oder Mutter vorteilhaft einsetzbar.

Bei einer vorteilhaften Ausgestaltung ist ein Primärleiter derart am Verbraucher vorgesehen, dass eine induktive Kopplung mit einer vom Verbraucher umfassten Sekundärwicklung **hergestellt** ist. Von Vorteil ist dabei, dass kein Steckverbinder notwendig ist und somit die Verkabelung schnell und einfach ausführbar ist. Außerdem sind Kosten einsparbar. Da keine Kabelkonfektionierung notwendig ist, kann die Installation auch durch nicht elektrotechnisch geschultes Personal durchgeführt werden.

Bei einer vorteilhaften Ausgestaltung ist mindestens ein Primärleiter in einer Vertiefung oder einem Kabelkanal des Verbrauchers vorgesehen. Von Vorteil ist dabei, dass die Kabelverlegung sehr schnell und einfach ausführbar ist, nämlich durch bloßes Hineindrücken in die Vertiefung oder den Kabelkanal. Zusätzlich ist ein Vergießen mit einer Vergussmasse vorteilig ausführbar.

Bei einer vorteilhaften Ausgestaltung umfassen die Mittel zur induktiven Versorgung eine elektronische Schaltung, **insbesondere umfassend einen Resonanzschwingkreis,** zur Versorgung von Teilen des Verbrauchers. Von Vorteil ist dabei, dass das Gehäuse zusätzlich gehäusebildend für die elektronische Schaltung zur Versorgung von Teilen des Verbrauchers ist.

**Bei einer vorteilhaften Ausgestaltung umfassen die Mittel zur induktiven Versorgung eine Sekundärwicklung, die im Gehäuse des Verbrauchers angeordnet ist. Somit ist eine Versorgung des Verbrauchers durch die Gehäusewand hindurch ohne einen Durchbruch oder eine sonstige Öffnung ermöglicht, und der Verbraucher ist in hoher Schutzart abschließbar.**

**Bei einer vorteilhaften Ausgestaltung ist die Sekundärwicklung um einen ferromagnetischen Kern gewickelt, wobei der ferromagnetische Kern Schenkel aufweist, die die Ausnehmung im Gehäuse des Verbrauchers teilweise umgreifen. Durch den ferromagnetischen Kern, der auch einstückig mit einem Gehäuseteil ausgebildet sein kann, wird die induktive Kopplung vorteilhaft verstärkt. Dadurch, dass der ferromagnetische Kern die Ausnehmung zumindest teilweise umgreift, ist die wirksame Fläche für die Ankopplung des in der Ausnehmung angeordneten Primärleiters an die Sekundärwicklung besonders groß. Hierdurch ist die Kopplungsstärke und somit der Wirkungsgrad nochmals gesteigert.**

**Bei einer vorteilhaften Ausgestaltung ist der ferromagnetische Kern der Sekundärwicklung teilweise gehäusebildend für den Verbraucher. Somit wird vorteilhaft zum einen Material eingespart und zum anderen eine Berührfläche für die verbesserte induktive Ankopplung des Primärleiters ausgebildet.**

Bei einer vorteilhaften Ausgestaltung ist der Verbraucher ein Antrieb, der zumindest einen Elektromotor und eine elektronische Schaltung zur Versorgung **und/oder Ansteuerung und/oder Regelung** des Elektromotors umfasst. Von Vorteil ist dabei, dass die Erfindung einsetzbar ist in der Antriebstechnik, insbesondere in Anwendungen, für die besondere Anforderungen an die Dichtigkeit von Gehäuse gestellt werden, beispielsweise in der Lebensmittelindustrie oder bei Einsatz unter ungünstigen Witterungsbedingungen, oder für die besondere Anforderungen hinsichtlich des Explosionsschutzes gestellt werden. Denn durch die Erfindung sind Steckverbindungen und Schleifkontakte **und Schalter** vermeidbar.

Bei einer vorteilhaften Ausgestaltung weist der Verbraucher ein Gehäuseteil auf, das gehäusebildende Funktion für einen Elektromotor, ein Getriebe und einen den Elektromotor versorgende elektronische Schaltung, umfassend Frequenzumrichter, aufweist, wobei die Rotorwelle des Elektromotors und Abtriebswelle des Getriebes im Gehäuseteil gelagert sind und das Einschiebeteil in einen Aufnahmebereich des Gehäuseteils einschiebbar ist. Vorteiligerweise ist somit ein Gehäuseteil geformt, das mehrere Funktionen vereint. Das Gehäuse ist also gehäusebildend für verschiedene Komponenten des Antriebs und dient der Aufnahme für die Versorgung.

Bei einer vorteilhaften Ausgestaltung ist mindestens eine Sekundärwicklung um einen U-förmigen und/oder E-förmigen Kern gewickelt oder in einen sehr flach ausgeführten Empfängerkopf integriert. Von Vorteil ist dabei, dass je nach verwendetem Verfahren, gewünschter Leistung und/**oder** gewünschtem Wirkungsgrad **und/oder gewünschtem Baumaß** die Ausführung wählbar ist.

Bei einer vorteilhaften Ausgestaltung sind die Primärleiter mindestens teilweise vergossen und/oder mittels eines Deckels geschützt. Von Vorteil ist dabei, dass eine besonders hohe Schutzart erreichbar ist und keine verschmutzungsgefährdeten Hohlräume entstehen. Derartige in Deckel bzw. Halter vergossene Leiterstücke können an einer glatten Gehäuseoberfläche des Verbrauchers montiert werden, so dass keine Vertiefung bzw. kein Kanal am Verbraucher vorgesehen werden muss.

Bei einer vorteilhaften Ausgestaltung ist der Verbraucher dicht, an der äußeren Oberfläche glatt und/oder in hoher Schutzart ausgeführt. Von Vorteil ist dabei, dass der Verbraucher insbesondere zum Einsatz in Nassbereichen und/oder aseptischen Bereichen vorsehbar ist.

Bei einer vorteilhaften Ausgestaltung umfasst der Verbraucher keinen Steckverbinder oder andere elektrische Anschlussvorrichtungen an seinem Äußeren. Von Vorteil ist dabei wiederum, dass der Verbraucher in einfacher Weise dicht und in hoher Schutzart ausführbar ist.

**Bei einer vorteilhaften Ausgestaltung umfasst das Einschiebeteil Führungsmittel, durch die der eingelegte Primärleiter geführt wird. Von Vorteil ist dabei, dass der Primärleiter, insbesondere der die induktive Kopplung bewirkende Abschnitt des Primärleiters, im oder am Einschiebeteil fixiert ist. Somit ist die relative Position des Primärleiters bezüglich des Verbrauchers, insbesondere bezüglich der Sekundärwicklung, sicher gestellt. Es sind somit definierte Kopplungsverhältnisse erreicht, und eine Überdimensionierung der am Primärleiter angebotenen Leistung ist verzichtbar.**

**Bei einer vorteilhaften Ausgestaltung ist am Einschiebeteil ein ferromagnetischer Bereich ausgebildet oder umfasst das Einschiebeteil einen ferromagnetischen Kern. Somit ist die Ankopplung verstärkt und folglich der Wirkungsgrad der Energieversorgung erhöht.**

**Bei einer vorteilhaften Ausgestaltung ist der ferromagnetische Kern mit dem Einschiebeteil lösbar verbunden ist. Somit ist je nach Anwendungsfall ein Kern vorsehbar oder es ist nachträglich ein kostengünstiger Kern gegen ein hochwertiges Material austauschbar.**

**Bei einer vorteilhaften Ausgestaltung ist der ferromagnetische Kern im Einschiebeteil eingegossen ist. Somit ist ein besonders robustes Einschiebeteil bereitgestellt.**

**Bei einer vorteilhaften Ausgestaltung ist der ferromagnetischen Kern teilweise gehäusebildend für das Einschiebeteil und/oder bildet ein Bereich des ferromagnetischen Kerns eine Außenfläche des Einschiebeteils bildet. Somit ist einerseits Material einsparbar und es wird andererseits eine Kontaktfläche ausgebildet, an die ein sekundärseitiger Kern durch direkte Berührung anschließbar ist. Somit werden Streuverluste minimiert.**

**Bei einer vorteilhaften Ausgestaltung bildet der in das Einschiebeteil eingelegte Primärleiter mindestens eine Schlaufe oder Windung, wobei der ferromagnetische Kern der Sekundärwicklung die Schlaufe oder Windung abdeckt. Somit werden die durch den Stromfluss im Primärleiter erzeugten magnetischen Flusslinien durch den Kern der Sekundärwicklung aufgenommen und durch die Sekundärwicklung geführt. Streuverluste sind vorteilhaft minimiert.**

**Bei einer vorteilhaften Ausgestaltung bildet der in das Einschiebeteil eingelegte Primärleiter mindestens eine Schlaufe oder Windung bildet, die eine Fläche berandet, wobei der ferromagnetische Bereich oder der ferromagnetische Kern in dieser Fläche angeordnet ist. Somit ist das durch den Stromfluss im Primärleiter erzeugte magnetische Feld verstärkt. Der Wirkungsgrad der Energieversorgung ist somit vorteilhaft erhöht.**

**Bei einer vorteilhaften Ausgestaltung wird die Ausnehmung teilweise durch Bereiche im Gehäuse des Verbrauchers gebildet, die eine erhöhte Wärmeleitfähigkeit aufweisen. Die Wärmeleitfähigkeit ist insbesondere größer als diejenige von handelsüblichem Kunststoff ohne Füllstoffe. Somit ist Wärme, die in der Sekundärwicklung, insbesondere im sekundärseitigen Kern entsteht, aus dem Gehäuse des Verbrauchers herausführbar zur Entwärmung. Besonders günstig ist es, wenn diese Bereiche derart angeordnet sind, dass die Feldlinien der induktiven Kopplung im Wesentlichen durch diese Bereiche hindurch treten. Somit wird die ohnehin erforderliche Berühr- oder Kontaktfläche zur Übermittlung der Energieversorgung zusätzlich zur Entwärmung nutzbar. Es ist somit ein kompaktes Baumaß des Verbrauchers erreichbar.**

**Bei einer vorteilhaften Ausgestaltung weist das vorzugsweise eigenständig ausgeführtes Gehäuse des Verbrauchers ein Gehäuseteil aufweist, das gehäusebildend für die Sekundärwicklung ist. Das Gehäuseteil umfasst somit den Aufnahmebereich für die berührungslose Energieversorgung. Besonders günstig ist es, wenn das Gehäuseteil für die Sekundärwicklung mit dem Elektromotor und einem Gehäuseteil der elektronischen Schaltung verbunden ist, insbesondere lösbar verbunden. Somit ist ein modularer Aufbau des Verbrauchers möglich, bei dem ein speziell für die induktive Energieversorgung ausgebildetes Gehäuseteil am Verbraucher vorgesehen wird, wenn eine solche induktive Energieversorgung, auch nachträglich, gewünscht ist. Hierdurch wird die Lagerhaltung und Fertigung des Verbrauchers vereinfacht.**

**Bei einer vorteilhaften Ausgestaltung ist das Gehäuseteil für die Sekundärwicklung zumindest bereichsweise aus wärmeleitendem Kunststoff gefertigt, insbesondere aus Kunststoff mit faserförmigem, wärmeleitendem Füllstoff. Von Vorteil ist hierbei, dass eine induktive Kopplung durch das Gehäuse hindurch möglich ist und gleichzeitig eine Entwärmung des Inneren erfolgen oder zumindest unterstützt werden kann. Durch die Verwendung von faserförmigem Füllstoff kann die Entwärmung gerichtet erfolgen.**

**Bei einer vorteilhaften Ausgestaltung ist das Gehäuseteil für die Sekundärwicklung zwischen dem Elektromotor und der elektronischen Schaltung angeordnet. Somit ist durch das Gehäuseteil eine Wärmesperre zwischen den beiden Wärmequellen Elektromotor und elektronischer Schaltung, beispielsweise Frequenzumrichter, ausführbar, oder eine empfindliche elektronische Schaltung ist vor Wärmeeinwirkung vom Elektromotor schützbar.**

**Bei einer vorteilhaften Ausgestaltung ist das Gehäuseteil für die Sekundärwicklung zumindest bereichsweise aus einem wärmeleitenden Kunststoff gefertigt. Von Vorteil ist dabei, dass Wärme von der Sekundärseite der induktiven Kopplung im Inneren an die Umgebung durch das Gehäuseteil hindurch abgegeben werden kann.**

**Bei einer vorteilhaften Ausgestaltung enthält der wärmeleitende Kunststoff des Gehäuseteils für die Sekundärwicklung wärmeleitende Fasern als Füllstoff, wobei die wärmeleitenden Fasern quer zur Verbindungsrichtung von Elektromotor und elektronischer Schaltung ausgerichtet sind. Somit ist einerseits der Wärmeaustausch zwischen Elektromotor und elektronischer Schaltung verhindert, also eine Wärmesperre ausgebildet, und andererseits eine Entwärmung der Sekundärwicklung mit Kern und der für die Energieentnahme erforderlichen elektronischen Schaltung, umfassend zumindest einen Schwingkreis und/oder einen Gleichrichter, ermöglicht.**

**Bei einer vorteilhaften Ausgestaltung ist das Gehäuseteil für die Sekundärwicklung aus einem Aluminium-Gusskörper gefertigt ist, wobei in das Gehäuseteil in Bereichen, durch welche die Feldlinien der induktiven Kopplung treten, Keramikplättchen und/oder Kunststoffplättchen, insbesondere wärmeleitende Kunststoffplättchen, eingelassen sind. Somit ist ein robuster Verbraucher mit berührungsloser Energieversorgung mit hohem Wirkungsgrad ausgebildet.**

**Bei einer vorteilhaften Ausgestaltung umfasst der Primärleiter einen Kabelmantel, der aus einem wärmeleitenden Kunststoff gefertigt ist. Beispielsweise sind Kunststoffe mit einem Füllstoff vorteilhaft einsetzbar, der Metallpulver, Metallocene, Graphit, Metallpartikel aus Kupfer oder Aluminium, Glasmikrokugeln und/oder Kunststoffkugeln, insbesondere mit Metallbeschichtung oder Metallbedampfung, oder eine Mischung dieser Stoffe enthält. Von Vorteil ist dabei, dass der Primärleiter zur Entwärmung des Verbrauchers, insbesondere der Kopplungseinrichtung, verwendbar ist. Zusätzliche Lüfter oder dergleichen sind verzichtbar. Durch die wärmeleitende Ausbildung des Primärleiters ist der Wärmeübergangswiderstand vom Innern des Einschiebeteils an einen Bereich des Primärleiters außerhalb des Einschiebeteils kleiner als der Wärmeübergangswiderstand vom Inneren des Einschiebeteils durch das Gehäuse des Einschiebteils an die Umgebung. Somit bildet die Oberfläche des Primärleiters eine große Entwärmungsfläche.**

**Besonders günstig ist es, wenn der ferromagnetische Bereich oder der ferromagnetische Kern im Einschiebeteil in eingeschobener Position des Einschiebeteils mit dem Kern der Sekundärwicklung wärmeleitend verbunden ist, insbesondere durch Berührung oder über mindestens einen wärmeleitenden Bereich im Gehäuse des Verbrauchers und/oder über mindestens ein in das Gehäuseteil für die Sekundärwicklung eingelegtes Keramikplättchen und/oder Kunststoffplättchen. Somit ist für die Entwärmung der Sekundärwicklung und überhaupt des Inneren des Verbrauchers ein Weg für den Wärmefluss gebildet, dessen Wärmeübergangswiderstand zwischen Wärmequelle und Umgebung geringer ist als der Wärmeübergangswiderstand bei einem Wärmefluss durch die Gehäusewand. Von Vorteil ist, dass eine zumindest zusätzliche Entwärmung einer Wärmequelle im Inneren des Verbrauchers, beispielsweise der durch Ummagnetisierung im sekundärseitigen Kern erzeugten Wärme, über den primärseitigen Kern und weiter über den Primärleiter an die Umgebung erfolgen kann. Die Entwärmung ist somit verbessert, und die Standzeit und Zuverlässigkeit des Verbrauchers erhöht.**

**Bei einer vorteilhaften Ausgestaltung ist der von dem Einschiebeteil umschlossene Abschnitt des Primärleiters wärmeleitend mit dem ferromagnetischen Bereich oder dem ferromagnetischen Kern im Einschiebeteil verbunden, insbesondere durch Berührung und/oder Wärmeleitpaste. Somit ist der Wärmeübergangswiderstand nochmals verringert. Die Wärmeleitpaste ist bei Einlegen des Primärleiters aufbringbar und bei Umsetzen des Einschiebeteils entlang des Primärleiters rückstandsfrei entfernbar.**

**Bei einer vorteilhaften Ausgestaltung ist an dem Einschiebeteil eine Ausnehmung vorgesehen ist, welche ein Sicherungselement aufnimmt. Somit ist das Einschiebeteil gegen ein Einschieben in die oder gegen ein Entfernen aus der Ausnehmung sicherbar. Ein Betriebsschalter für den Verbraucher ist somit auch aus Sicherheitsaspekten verzichtbar.**

**Bei einer vorteilhaften Ausgestaltung ist das Sicherungselement ein Schloss, dessen Schlossbügel in oder durch die Ausnehmung geführt ist. Die Ausnehmung ist vorteilhaft als Bohrung ausgeführt. Besonders günstig ist es, wenn durch das Schloss das Einschiebeteil zusätzlich gegen Öffnen gesichert ist, so dass der Primärleiter nur bei geöffnetem Schloss aus dem Einschiebeteil entfernbar ist. Mit der Ausgestaltung ist ein preiswertes Sicherungsmittel bereitgestellt.**

**Bei einer vorteilhaften Ausgestaltung ist das Sicherungselement als insbesondere elektrisch betätigbares Verriegelungselement am Verbraucher, insbesondere in der Ausnehmung, ausgebildet. Das Verriegelungselement ist vorteilhaft als verschiebbarer und/oder drehbarer Bolzen oder Riegel oder Vorsprung ausgebildet. Von Vorteil ist dabei, dass eine Fernbetätigung und/oder elektronische Sicherung möglich ist. Alternativ ist ein automatisches Einfallen des Verriegelungselements nach Entfernen und/oder nach Einschieben des Einschiebeteils vorgesehen, so dass eine umgekehrte Handlung, also die Inbetriebnahme nach einer Stilllegung oder die Stilllegung nach einer Inbetriebnahme, eine Entsicherung oder ein Öffnen der Verriegelung erfordert und daher der Verbraucher gegen unbefugte oder versehentliche Veränderung gesichert ist.**

Wichtige Merkmale der Erfindung bei dem System sind, dass zumindest Verbraucher und Einschiebeteile umfasst sind, wobei die Verbraucher berührungslos versorgt sind mittels jeweiliger induktiver Kopplung an einen oder mehrere Primärleiter. Vorteilhaft ist der Verbraucher derart ausgeführt, dass der Primärleiter vom Verbraucher abnehmbar ist. In einer Weiterbildung ist mindestens ein Teilabschnitt, insbesondere im Wesentlichen jeder Punkt, des Primärleiters als Abgriffspunkt für die induktive Ankopplung eines Verbrauchers zerstörungsfrei verwendbar, insbesondere wiederverwendbar. Somit ist die Energieversorgung eines Systems von Verbraucher besonderes flexibel und robust gegen Umwelteinflüsse herstellbar. Das System lässt sich einfach und mit wenigen Maßnahmen neu konfigurieren. Insbesondere sind neue Verbraucher einfach in das Netz der berührungslosen Energieversorgung integrierbar.

In einer weiteren vorteilhaften Ausgestaltung ist der Abgriffspunkt von einem Einschiebeteil umfasst, das in einer Ausnehmung des jeweiligen Verbrauchers herausnehmbar angeordnet ist. Somit ist der Abgriffspunkt und folglich der diesem zugeordnete Abschnitt des Primärleiters einfach und definiert in Arbeitsposition bringbar.

In einer weiteren vorteilhaften Ausgestaltung ist der Abgriffspunkt entlang des Primärleiters durch bloßes Herausnehmen des Primärleiters aus dem Einschiebeteil und Umsetzen des Einschiebeteils verschiebbar ist, insbesondere entlang des Primärleiters. Von Vorteil ist dabei, dass eine Umordnung der Verbraucher bei beibehaltender Kabelführung des Primärleiters einfach durchführbar ist. Insbesondere sind Abgriffe zur Energieentnahme aus dem Primärleiter verzichtbar.

In einer weiteren vorteilhaften Ausgestaltung ist mindestens ein Primärleiter kraftschlüssig oder formschlüssig im Verbraucher, insbesondere durch ein Einschiebeteilgehalten.

In einer weiteren vorteilhaften Ausgestaltung ist ein Verbraucher auf einem bewegbaren Teil, insbesondere Drehtisch oder Lineartrieb, angeordnet, wobei insbesondere das Teil drehbar gelagert oder linear bewegbar ist.

In einer weiteren vorteilhaften Ausgestaltung ist der Primärleiter aus einem AC/AC-Wandler, also Wechselstrom-Wechselstrom-Wandler, versorgt. Vorteilhaft ist er somit aus dem Netz mit 50 oder 60 Hz versorgbar.

In einer weiteren vorteilhaften Ausgestaltung ist der Primärleiter mit mittelfrequentem Wechselstrom beaufschlagt. Vorteilhaft ist er mit etwa 10 bis 50 kHz, insbesondere mit etwa 20 kHz, beaufschlagbar. Somit werden Verluste gering gehalten, insbesondere bei hohen Leistungen.

In einer weiteren vorteilhaften Ausgestaltung versorgt der Primärleiter die Verbraucher seriell. Somit sind vorteilhaft Leitungen einsparbar.

In einer weiteren vorteilhaften Ausgestaltung ist der Primärleiter über stationäre, mindestens eine Spulenwicklung umfassende Spulenkerne berührungslos oder über Schleifleitung mit Energie versorgt. Von Vorteil ist dabei, dass eine bewegbare Anordnung des Primärleiters ermöglicht ist.

In einer weiteren vorteilhaften Ausgestaltung ist der Primärleiter als geschlossene Schleife verlegt. Von Vorteil ist dabei, dass eine einfache Verlegung vorsehbar ist.

In einer weiteren vorteilhaften Ausgestaltung sind Primärleiter und Verbraucher galvanisch entkoppelt. Von Vorteil ist dabei, dass das System bei Anwendungen mit hohen Anforderungen hinsichtlich des Explosionsschutzes einsetzbar ist. Von Vorteil ist weiterhin, dass Kontaktschwierigkeiten wegen korrodierter oder verschmutzter Kontakte vermeidbar sind. Zusätzlich ist somit der Einsatz von nach außen weisenden, spannungsführenden Teilen vermeidbar.

Wichtige Merkmale der Erfindung bei dem Verfahren sind, dass ein Verbraucher an ein System zur berührungslosen Energieversorgung angeschlossen ist, wobei das System zur berührungslosen Energieversorgung einen Primärleiter umfasst, wobei in einem ersten Schritt ein Abschnitt des Primärleiters in ein geöffnetes Einschiebeteil zerstörungsfrei eingelegt wird, in einem zweiten Schritt das Einschiebeteil geschlossen wird, in einem dritten Schritt das Einschiebeteil in eine Ausnehmung des Verbrauchers eingeschoben wird. Von Vorteil ist dabei, dass eine einfachere und kostengünstigere Verkabelung bei elektrischen Verbrauchern und Anlagen geschaffen ist.

In einer weiteren vorteilhaften Ausgestaltung erfolgt beim Schließen des Einschiebeteils eine Verriegelung, insbesondere durch Rastverbindung. Von Vorteil ist dabei, dass der Primärleiter sicher im Einschiebeteil gehalten wird, insbesondere vor Einschieben des Einschiebeteils.

In einer weiteren vorteilhaften Ausgestaltung erfolgt das Einschieben des Einschiebeteils entlang eines Führungsmittels, wobei insbesondere die Führungsmittel ein sicherndes Einrasten in der Endposition bewirken. Von Vorteil ist dabei, dass das Einschiebeteil sicher im Gehäuse gehalten wird, insbesondere nach Einschieben des Einschiebeteils, und dass das Einschieben einfach und schnell vornehmbar ist.

In einer weiteren vorteilhaften Ausgestaltung wird durch den dritten Schritt die induktive Versorgung des Verbrauchers bereitgestellt. Von Vorteil ist dabei, dass weitere Schritte und Maßnahmen, wie beispielsweise das Einführen eine ferromagnetischen Kerns zur Verbesserung der Kopplung zwischen Primärleiter und Sekundärleiter, verzichtbar sind. Somit wird beim Bereitstellen der Energieversorgung Zeit eingespart. Aufwändige Mechanik zur womöglich automatischen Bewegung eines nach Stand der Technik erforderlichen ferromagnetischen Koppelelements ist somit verzichtbar.

**Bei einer vorteilhaften Ausgestaltung erfolgt die berührungslose Energieversorgung durch eine induktive Kopplung des Verbrauchers an den in das Einschiebeteil eingelegten Abschnitt des Primärleiters, wobei die durch die induktive Kopplung erzeugte Abwärme zumindest teilweise durch den eingelegten Primärleiter an die Umgebung abgeführt wird. Somit ist ein neuartiges Entwärmungsverfahren eines Verbrauchers über seine Energieversorgungsleitungen beschrieben.**

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

**Die Erfindung wird nun anhand von Abbildungen näher erläutert:**
Dabei zeigt
- Fig. 1: einen erfindungsgemäßen Verbraucher mit Primärleiter,
- Fig. 2: den erfindungsgemäßen Verbraucher mit Primärleiter mit eingeschobenem Einschiebeteil,
- Fig. 3: ein erfindungsgemäßes Einschiebeteil in geöffnetem Zustand,
- Fig. 3a: ein erfindungsgemäßes Einschiebeteil in geöffnetem Zustand mit ferromagnetische Kern,
- Fig. 4: eine schematische Darstellung eines erfindungsgemäßen Systems von Verbrauchern, die aus einem Primärleiter versorgt werden,
- **Fig. 5**: **einen weiteren erfindungsgemäßen Verbraucher mit Primärleiter und Einschiebeteil und**
- **Fig. 6**: **den erfindungsgemäßen Verbraucher aus** **Figur 5** **mit eingeschobenem Einschiebeteil.**

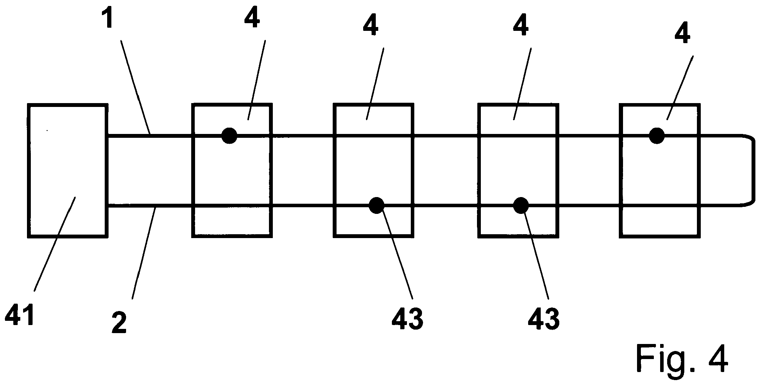

Figur 4 zeigt schematisch ein System, in dem eine Energiequelle 41 Verbraucher 4 über einen Hinleiter 1 und einen Rückleiter 2 berührungslos versorgt. Die Verbraucher 4 sind jeweils an einem Abgriffspunkt 43 an Hinleiter 1 oder Rückleiter 2, auch gemeinsam jeweils Primärleiter genannt, angeschlossen, wobei beide Leiter zum Zwecke des Anschließens gleichberechtigt sind. Die Punktförmigkeit der Abgriffspunkte 43 ergibt sich durch eine Abstraktion des Systems im Sinne eines Netzwerks. In jeder physikalischen Realisierung des Systems ist der Abgriffspunkt ein räumlich abgegrenztes Gebiet, innerhalb dessen die physikalische Wechselwirkung des Anschlusses im Wesentlichen erfolgt. Die räumliche Ausdehnung dieses Gebietes, also insbesondere die Länge des an der Wechselwirkung beteiligten Abschnitts des Primärleiters 1 oder 2, ist wesentlich kleiner als die räumliche Gesamt-Ausdehnung des Systems, was die Brauchbarkeit und Rechtfertigung der Abstraktion eines Punktes für das Anschlussgebiet begründet. **Als Abgriffspunkt 43 ist jeder beliebige Abschnitt des Primärleiters 1 oder 2 verwendbar, dessen Länge der Ausdehnung des räumlichen Gebiets der physikalischen Wechselwirkung des Anschlusses entspricht. Somit sind die Abgriffspunkte 43 in** **Figur 4** **entlang des Primärleiters verschiebbar. Da der Anschluss, wie im folgenden beschrieben wird, zerstörungsfrei erfolgt, ist die Auswahl eines Abgriffspunkts 43 reversibel, und es kann nachträglich ein anderer Abgriffspunkt 43 statt des zunächst ausgewählten Abgriffspunkt 43 gewählt werden.**

In einer Weiterbildung sind die Primärleiter 1, 2 zusätzlich mit einem Hochfrequenzsignal beaufschlagt zur Übermittlung von Daten und Kommandos. Die Verbraucher 4 umfassen in diesem Fall Mittel zur Auf- und Demodulation derartiger Daten.

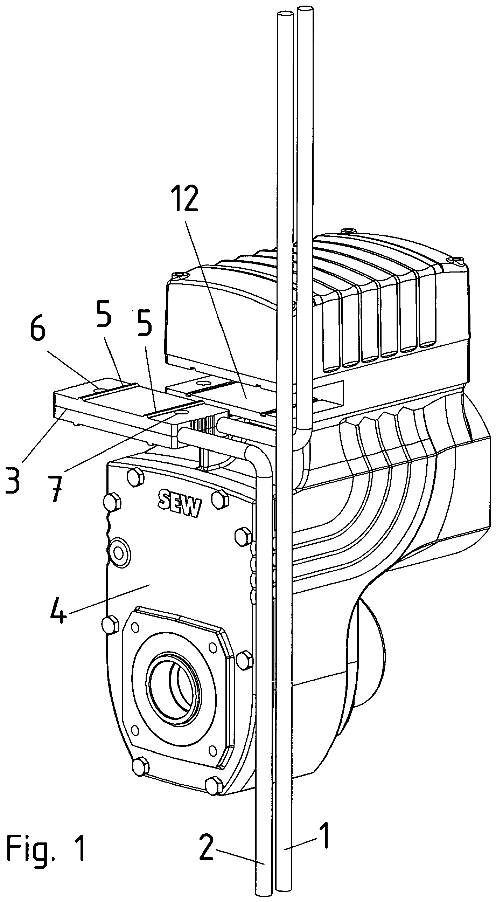

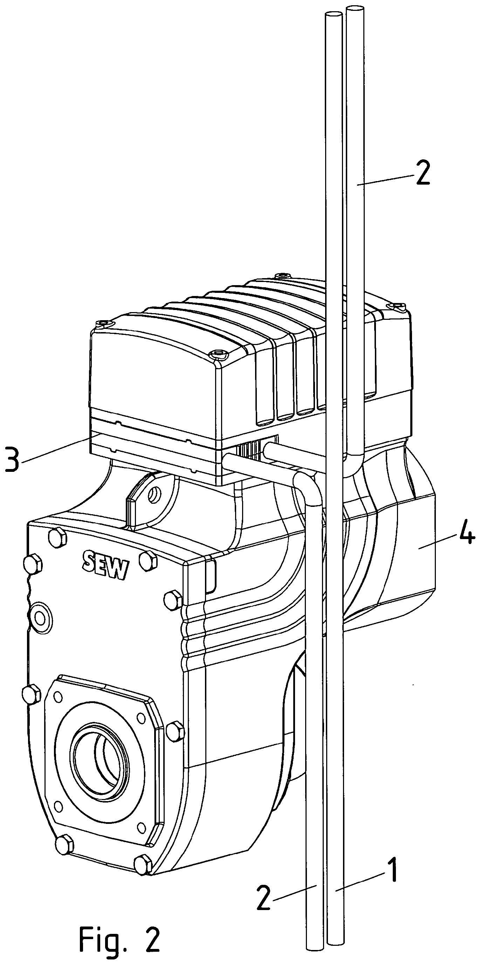

In der Figur 1 ist ein erfindungsgemäßer Verbraucher symbolisch gezeigt, wobei der Verbraucher von der Versorgung abgetrennt ist. In der Figur 2 ist ein erfindungsgemäßer Verbraucher symbolisch gezeigt mit Versorgung.

Das Primärleitersystem umfasst einen Hinleiter 1 und einen Rückleiter 2, in welche ein mittelfrequenter Wechselstrom eingeprägt wird.
Der als Umrichtergetriebemotor ausgeführte Verbraucher 4 umfasst eine Sekundärspule, die nach Einschieben des Einschiebeteils 3 induktiv gekoppelt ist an das Primärleitersystem.

Das Einschiebeteil 3 weist Erhebungen 5 zur formschlüssigen Verbindung mit dem Verbraucher 4 oder zumindest als Führung beim Einschieben des Einschiebeteils 3 auf. Bohrungen 6, 7 sind des Weiteren vorgesehen. Das Einschiebeteil 3 lässt sich insbesondere zum Einlegen des Primärleiters, also des Hinleiters 1 oder Rückleiters 2, öffnen.

Mittels einer Schraube, die durch die Bohrung 6 steckbar ist und auch in einer Bohrung des Verbrauchers einbringbar ist, kann das Einschiebeteil 3 mit dem Verbraucher 4 formschlüssig gekoppelt werden. Dabei ist ein Werkzeug notwendig und das Lösen der Verbindung ist nur von Bedienern mit Werkzeug ausführbar. Alternativ oder zusätzlich bewirkt die in die Bohrung 6 eingesteckte Schraube eine Sicherung des Einschiebeteils gegen Öffnen desselben.

In der Bohrung 7 ist bei aus dem Verbraucher herausgenommenem Einschiebeteil 3 ein Vorhängeschloss mit seinem Schlossbügel einhängbar. Auf diese Weise ist das WiederEinschieben des Einschiebeteils in den Verbraucher blockierbar.

Somit kann nur ein befugter Bediener mit Schlüssel für das Schloss des Vorhängeschlosses die elektrische Versorgung des Verbrauchers wiederherstellen.

Der Verbraucher weist einen U-Kern oder einen E-förmigen Kern auf, der die Sekundärspule an das Primärleitersystem verbessert ankoppelt.

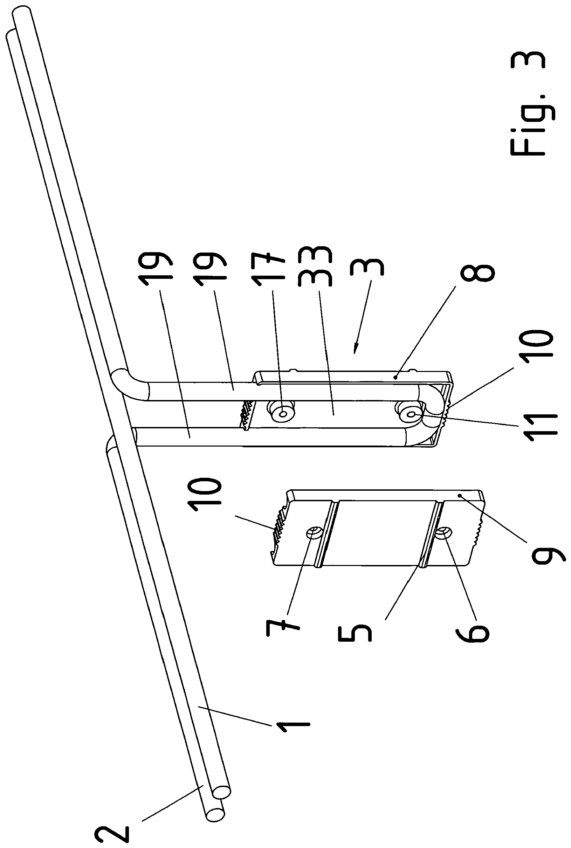

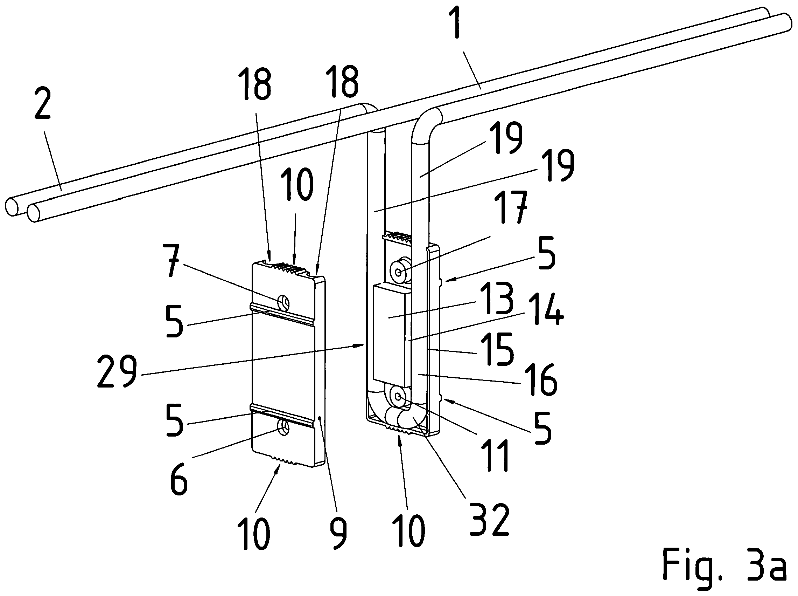

In Figur 3 ist das Einschiebeteil 3 vor dem Einschieben in geöffnetem Zustand gezeigt. Das Einschiebeteil setzt sich aus einem Oberteil 9 und einem Unterteil 8 zusammen. Oberteil 9 und/oder Unterteil 8 weisen Greifflächen 10 auf, die ein Öffnen des Einschiebeteils 3 erleichtern. Die Greifflächen zur Verbesserung der Griffigkeit sind geriffelt ausgeführt.

In das geöffnete Einschiebeteil 3 wird der Rückleiter des Primärleitersystems 2 eingelegt. Alternativ wird der Hinleiter des Primärleitersystems 1 eingelegt. Zur Führung des eingelegten Primärleiters sind Erhebungen 11 **und 17** vorgesehen.

**Der eingelegte Primärleiter 2 wird somit zumindest durch die Erhebungen 11 und 17 und die Wandung des Unterteils 8 U-förmig in einer Schlaufe geführt, die im Wesentlichen zwischen den Primärleiteraustritten 19 eine Windung beschreibt. Diese Windung berandet eine Windungsfläche 33, durch die bei einem Stromfluss im Primärleiter die erzeugten magnetischen Feldlinien treten.**

**Die Erhebungen 11 und 17 formen zusätzlich Ausnehmungen in Form von jeweils einer Bohrung aus, durch die Verbindungsmittel, zum Beispiels Schrauben, steckbar sind zur Verbindung des Oberteils 9 mit dem Unterteil 8.**

**Wie aus der** **Figur 3** **ersichtlich, wird die Schlaufe des Primärleiters 2 im zusammengesetzten Zustand im Einschiebeteil 3 auch durch die Wandung des Oberteils 9 geformt.**

Nach Schließen des Einschiebeteils 3, also nach Aufsetzen des Oberteils 9 auf das Unterteil 8, wird das Einschiebeteil 3 mittels in die Bohrungen 6 und 7 eingeführter Schrauben in geschlossenem Zustand arretiert.

**Bei einem weiteren Ausführungsbeispiel werden im Einschiebeteil 3 auch mehr als eine Windung des Primärleiters 2 ausgeformt, wobei die jeweiligen Windungsflächen zur Deckung gebracht sind und sich so das induzierte Magnetfeld addiert.**

Bei einem weiteren Ausführungsbeispiel sind Oberteil und Unterteil klappbar ausgeführt.

Bei einem weiteren Ausführungsbeispiel sind die Greifflächen gummiert ausgeführt.

Bei einem weiteren Ausführungsbeispiel ist ein Schiebe- oder Einrastmechanismus zur Fixierung des Einschiebeteils in geschlossenem Zustand vorhanden.

Bei einem weiteren Ausführungsbeispiel sind zur Aufnahme und Führung des eingelegten Primärleiters im Unter- und/oder Oberteil Ausnehmungen eingebracht.

Bei einem weiteren Ausführungsbeispiel wird nach Schließen des Einschiebeteils, also nach Zusammenbringen des Oberteils mit dem Unterteil, dieses mittels Einrastmitteln arretiert.

Bei einem weiteren Ausführungsbeispiel umfassen die Führungsmittel zusätzlich Mittel zum Einrasten und Fixieren des Einschiebeteils in der eingeschobenen Endposition.

Figur 4 zeigt eine schematische Darstellung eines erfindungsgemäßen Systems von Verbrauchern, die aus einem Primärleiter versorgt werden. Zum Anschluss der berührungslosen Energieeinspeisung gemäß den vorgenannten Ausführungsbeispielen an einen Verbraucher 4 wird zunächst ein Primärleiter 1 oder 2 in ein geöffnetes Einschiebeteil 3 eingelegt, anschließend wird das Einschiebeteil 3 geschlossen und vorzugsweise gegen Öffnen gesichert, anschließend wird das Einschiebeteil 3 in die dafür vorgesehene Ausnehmung im Verbraucher 4 eingeschoben, vorzugsweise entlang von Führungsmitteln, die als Erhebungen 5 ausgebildet sind. Somit ist die berührungslose Energieversorgung des Verbrauchers hergestellt. Der eingelegte Primärleiter 1 oder 2 bleibt unbeschädigt und kann nach Entfernung des Einschiebeteils 3 wiederverwendet werden. Insbesondere ist somit der Abgriffspunkt des Verbrauchers 4, also die räumliche Position des Einschiebeteils 3 und der an der physikalischen Wechselwirkung der induktiven Kopplung im Wesentlichen beteiligte Abschnitt des Primärleiters in der oben beschriebenen Abstraktion, entlang des Primärleiters 1 oder 2 verschiebbar. Denn der in Figur 3 im Einschiebeteil 3 eingelegte Abschnitt des Primärleiters unterscheidet sich nicht von den benachbarten Abschnitten. Es sind daher im Wesentlichen, also abgesehen von ausgezeichneten Bereichen wie Anfang und Ende, alle Punkte des Primärleiters als Abgriffspunkt verwendbar.

Es ist außerdem für die Energieeinspeisung eine hohe Schutzart wie IP65 oder IP66 oder höher erreichbar, weil der Verbraucher 4 mit geschlossener Gehäuseoberfläche ausführbar ist und dennoch mit Energie versorgbar ist.

**Figur 3a** **zeigt ein weiteres erfindungsgemäßes Einschiebeteil 3. Im Unterschied zu dem Einschiebeteil 3 nach** **Figur 3** **ist hier in die Windungsfläche 33 ein ferromagnetischer Kern 13 eingelegt. Das Einschiebeteil nach** **Figur 3a** **ist somit als eine optionale Variante des Einschiebeteils nach** **Figur 3** **ausgebildet. Somit ist das durch einen Primärleiterstrom erzeugte und durch die Windungsfläche 33 hindurch tretende magnetische Feld gegenüber den Verhältnissen in** **Figur 3** **verstärkt.**

**Der ferromagnetische Kern 13 ist lösbar mit dem Unterteil 8 des Einschiebeteils 3 verbunden und in eine kraftschlüssig haltende Aufnahme eingelegt. Eine Seitenfläche 14 des quaderförmig ausgebildeten ferromagnetischen Kerns 13 bildet gemeinsam mit dem krempenartig ausgeformten Rand 15 des Unterteils 8 einen geradlinigen Kabelkanal, in den ein Abschnitt 16 des Primärleiters 2 eingelegt ist. Der Primärleiterabschnitt 16 liegt somit sowohl an dem Rand 15 als auch an der Seitenfläche 14 des ferromagnetischen Kerns an. Die der Seitenfläche 14 gegenüberliegende Seitenfläche des ferromagnetischen Kerns bildet mit dem umlaufenden Rand 15 einen gleichartigen Kabelkanal, in den ebenfalls ein Primärleiterabschnitt 29 eingelegt ist. Ein Abschnitt zwischen den geradlinigen Primärleiterabschnitten 16, 29 ist um eine Erhebung 11 geführt und bildet so einen Primärleiterbogen 32.**

**Bei einem Ausführungsbeispiel ist der ferromagnetische Kern 13 in das Kunststoffmaterial des Einschiebeteils 3 eingegossen, oder es sind im Kunststoffmaterial Bereiche ausgebildet, in denen der Kunststoff ein ferromagnetisches Füllmaterial enthält.**

**Primärleiterabschnitt 16, Primärleiterbogen 32 und Primärleiterabschnitt 29 bilden in** **Figur 3a** **somit eine Windung zwischen den Primärleiteraustritten 19. Die Windung beschreibt bis auf das Stück zwischen den Primärleiteraustritten 19 nahezu eine volle Umdrehung.**

**Oberteil 9 und Unterteil 8 sind identisch ausgebildet.**

**In den Rand des Unterteils 8 und in den Rand des Oberteils 9 sind Ausnehmungen 18 vorgesehen, durch die der Primärleiter 2 an den Primärleiteraustritten in das beziehungsweise aus dem Einschiebeteil 3 geführt ist.**

**Die Primärleiter 1, 2 weisen bei einem Ausführungsbeispiel eine Isolationsschicht auf, die aus wärmeleitendem Kunststoff gefertigt ist. Insbesondere ist diese Isolationsschicht zumindest zweilagig aufgebaut und umfasst eine innere Lage aus einem geflochtenem Schlauch aus Glasseidenfasern oder einer Mischung aus Glasseiden und Kunststofffaser oder einem anderen flexiblen Trägermaterial, einer zweiten Schicht aus einem Silikonharz und/oder einem Silikonkautschuk mit einem wärmeleitenden Füllstoff. Durch die Berührung des Primärleiterabschnitts 16 mit der Seitenfläche 14 des ferromagnetischen Kerns 13 wird ein guter Wärmekontakt mit einem geringen Wärmeübergangswiderstand hergestellt, und der Primärleiter 2 kann von dem ferromagnetischen Kern 13 Wärme aufnehmen und durch die Ausnehmungen 18 aus dem Einschiebeteil 3 heraus leiten. Somit ist das Einschiebeteil 3 durch den Primärleiter 2 entwärmt. Dieser Wärmekontakt ist durch das Einbringen von Wärmeleitpaste in die zuvor beschriebenen Kabelkanäle verbesserbar. Die Wärmeleitpaste kann bei einem Umsetzen des Einschiebeteils 3 entlang des Primärleiters 2 leicht vom Primärleiter abgewischt und an neuer Stelle erneut aufgetragen werden.**

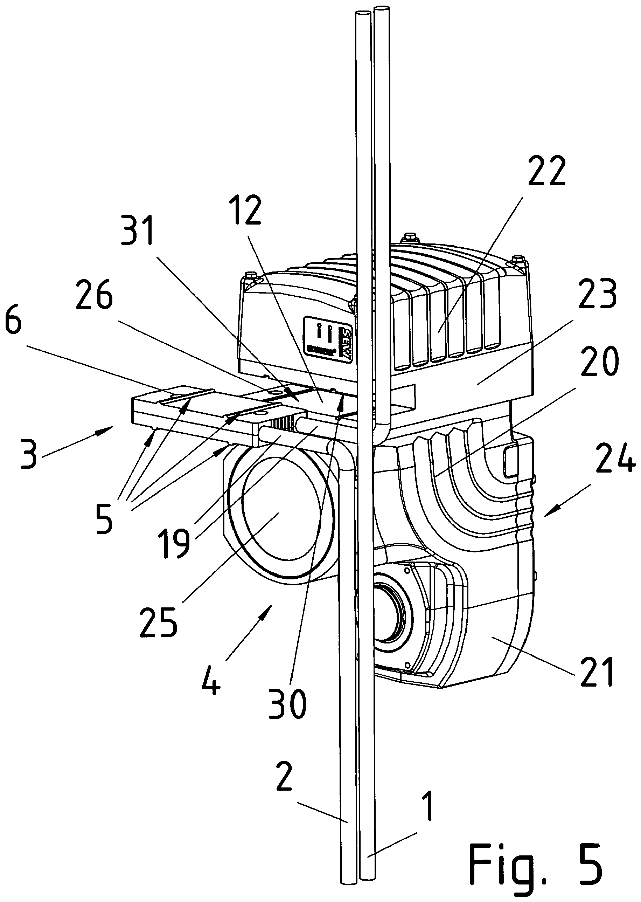

**Figur 5** **zeigt ein weiteres Ausführungsbeispiel eines Verbrauchers. Der allgemein mit 4 bezeichnete Verbraucher umfasst einen Motor 20, ein Getriebe 21 und einen Frequenzumrichter 22 und bildet somit eine kompakte Antriebseinheit. Motor 20 und Getriebe 21 sind in einem gemeinsamen Gehäuse aus Aluminiumguss angeordnet und gelagert. Der Frequenzumrichter 2 ist von einer gehäusebildenden Haube umschlossen, die ebenfalls aus Aluminium gefertigt ist.**

**Motor 20, Getriebe 21 und Frequenzumrichter 22 sind wie bei dem Verbraucher 4 ausgebildet.**

**Zwischen Frequenzumrichter 22 und Motor 20 ist ein Sekundärspuleneinsatz 23 angeordnet. Der Sekundärspuleneinsatz 23 umschließt gehäusebildend eine nicht gezeigte Sekundärwicklung und eine elektronische Schaltung, die ihrerseits zumindest einen Resonanzschwingkreis und/oder eine Gleichrichtungsstufe umfasst.**

**Am Sekundärspuleneinsatz 23 ist eine Ausnehmung 12 ausgebildet, in die ein Einschiebeteil 3 einschiebbar ist. Das Einschiebeteil 3 weist Führungselemente in Form von rippenartig verlaufenden Erhebungen 5, die in entsprechende, in Flächen der Gehäusewand des Sekundärspuleneinsatzes 23 eingebrachte Nuten greifen, wodurch ein Einschieben des Einschiebeteils 3 geführt wird.**

**Im Gegensatz zum Ausführungsbeispiel nach** **Figur 1** **und** **2** **ist die Ausnehmung 12 im Sekundärspuleneinsatz zur B-Lagerseite 25 des Motors 20 hin orientiert. Somit ist auf der A-Lagerseite 24, auf der auch der Austritt der Abtriebswelle des Getriebes 21 vorgesehen ist, genügend Freiraum geschaffen für einen kompakten Anbau der Antriebseinheit an eine Anlage oder Vorrichtung.**

**In der Ausnehmung 12 sind ebene Entwärmungsflächen 30 und 31 ausgebildet, die im eingeschobenen Zustand entsprechende Oberflächen am Einschiebeteil 3 flächig berühren. Somit ist nicht nur die Halterung des Einschiebeteils 3 in der Ausnehmung sicher bewirkt, sondern es ist zusätzlich ein guter Wärmekontakt, also eine Wärmebrücke mit geringem Wärmeübergangswiderstand, zwischen dem Inneren des Sekundärspuleneinsatzes 23, insbesondere der Sekundärwicklung und/oder einer elektronischen Schaltung, und dem Einschiebeteil 3 hergestellt. Eine Entwärmung des Inneren des Sekundärspuleneinsatzes 23 durch das Einschiebeteil 3 und weiter durch die Primärleiteraustritte 19 des Primärleiters 2 ist somit durchführbar.**

**Der Sekundärspuleneinsatz 23 ist zumindest bereichsweise oder ganz aus Kunststoff gefertigt und bildet so eine Wärmesperre zwischen dem Motor 20 und der elektronischen Schaltung, dem Frequenzumrichter 22.**

**Bei einem Ausführungsbeispiel enthält der Kunststoff einen wärmeleitenden Füllstoff in Form von Kohlenstofffasern. Die Kohlenstofffasern sind quer zu der Verbindungslinie von Motor 20 und Frequenzumrichter 22 ausgerichtet, wodurch sich eine erhöhte Wärmeleitfähigkeit quer zu dieser Verbindungslinie ergibt. Es findet also kein erhöhter Wärmeaustausch zwischen Motor 20 und Frequenzumrichter 22 statt, sondern es wird vermehrt Wärme aus dem Bereich der Ausnehmung 12 weggeleitet.**

**Bei einem weiteren Ausführungsbeispiel ist der Sekundärspuleneinsatz 23 aus einem keramischen Werkstoff gefertigt.**

**Bei einem weiteren Ausführungsbeispiel ist der Sekundärspuleneinsatz aus Aluminium gefertigt und weist in den Entwärmungsflächen 30, 31 Öffnungen auf, in die Keramikplättchen oder Kunststoffplättchen eingelegt sind, wodurch diese Öffnungen dicht verschlossen werden. Die Öffnungen sind dabei so bemessen, dass der wesentliche Anteil der durch die Windung im Einschiebeteil im eingeschobenen Zustand erzeugten magnetischen Feldlinien durch die Öffnungen und nicht durch das Aluminiumgehäuse des Sekundärspuleneinsatzes 23 tritt. Die Öffnungen umschließen also eine Fläche, die im Wesentlichen der Windungsfläche 33 gleicht und diese überdeckt. Die von der Windung 33 im Einschiebeteil 3 erzeugten magnetischen Feldlinien werden gebündelt und ins Innere des Sekundärspuleneinsatzes 23 geführt. Durch eine Kernanordnung im Inneren des Sekundärspuleneinsatzes 23 wird diese Bündelung verstärkt. Insbesondere wird durch einen U-förmigen Kern im Inneren des Sekundärspuleneinsatzes 23 bewirkt, dass die magnetischen Feldlinien durch eine Entwärmungsfläche 30, 31 in den Sekundärspuleneinsatz 23 eintreten und zu der anderen Entwärmungsfläche 30, 31 wieder heraus, wobei im Wesentlichen kein Streufeld durch das Aluminiumgehäuse tritt. Somit werden Wirbelstromverluste vermieden.**

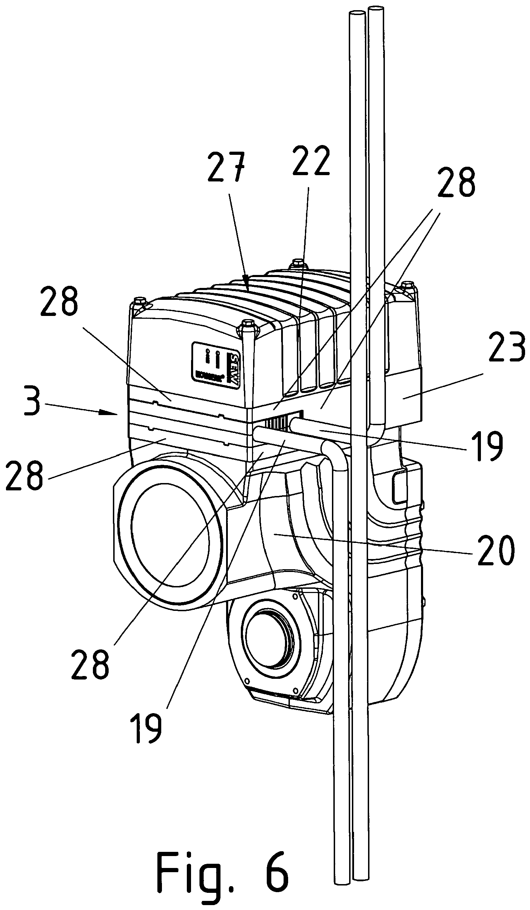

**Figur 6** **zeigt die Antriebseinheit aus** **Figur 5** **mit in die Ausnehmung 12 eingeschobenen Einschiebeteil 3. In unmittelbarer Nähe zu der Ausnehmung 12 ist im Inneren des Sekundärspuleneinsatzes 23 ein ferromagnetischer Kern angeordnet, der die Ausnehmung in den Kopplungsbereichen 28 U-förmig umgreift.**

**Bei einem Ausführungsbeispiel ist an einer oder an beiden Entwärmungsflächen 30, 31 eine Sekundärwicklung in einen flachen, eben ausgeformten Kern eingelegt.**

**Der Motor 20 wird durch sein Gehäuse entwärmt, das er mit dem Getriebe teilt, während der Frequenzumrichter 22 durch die ihn gehäusebildend umgebende Haube mit Kühlrippen 27 entwärmt wird. Die im Inneren des Sekundärspuleneinsatzes 23 erzeugte Wärme, insbesondere durch die induktive Kopplung und/oder durch elektronische Beeinflussung des induzierten Signals, wird jedoch an das Einschiebeteil 3, vorzugsweise an den ferromagnetischen Kern 13 im Inneren des Einschiebeteils 3, und von dort an den Primärleiter 2 über die Primärleiteraustritte 19 an die Umgebung abgeführt. Hierzu bildet der Primärleiter 1, 2 auf seiner gesamten Länge genügend Oberfläche aus, über die die Wärme an die Umgebung abgegeben werden kann.**

**Bei einem Ausführungsbeispiel ist der ferromagnetische Kern des Einschiebeteils E-förmig ausgeführt.**

**Bei einem Ausführungsbeispiel ist der ferromagnetische Kern teilweise durch das Gehäuse des Einschiebeteils hindurch geführt und bildet so eine Kontaktfläche am Einschiebeteil aus. Diese Kontaktfläche ist in der äußeren Oberfläche des Einschiebeteils so angeordnet, dass die mit mindestens einer Entwärmungsfläche 30, 31 in der Ausnehmung 12 des Sekundärspuleneinsatzes 23 im eingeschobenen Zustand in Berührung kommt.**

**Bei einem Ausführungsbeispiel ist der ferromagnetische Kern im Sekundärspuleneinsatz 23 mit dem Gehäuse vergossen und bildet einen Bereich an der äußeren Oberfläche der Ausnehmung, insbesondere in den Entwärmungsbereichen 30 und 31, der mit dem ferromagnetischen Kern des Einschiebeteils 3 in flächige Berührung bringbar ist.**

**Die Erfindung betrifft einen Verbraucher mit Mitteln zu seiner induktiven Versorgung, wobei die Mittel ein Einschiebeteil umfassen, nach dessen Einschieben in den Verbraucher dessen Versorgung vorgesehen ist.**

### Bezugszeichenliste

1 Hinleiter als Primärleiter des Primärleitersystems
2 Rückleiter als Primärleiter des Primärleitersystems
3 Einschiebeteil
4 Verbraucher
5 Erhebungen
6 Bohrung
7 Bohrung
8 Unterteil
9 Oberteil
10 Greiffläche
11 Erhebung
12 Ausnehmung
**13 Kern**
**14 Seitenfläche**
**15 Rand**
**16 Primärleiterabschnitt**
**17 Erhebung**
**18 Ausnehmung**
**19 Primärleiteraustritt**
**20 Motor**
**21 Getriebe**
**22 Frequenzumrichter**
**23 Sekundärspuleneinsatz**
**24 A-Lagerseite**
**25 B-Lagerseite**
**26 Verriegelungsbohrung**
**27 Kühlrippen**
**28 Kopplungsbereich**
**29 Primärleiterabschnitt**
**30 Entwärmungsfläche**
**31 Entwärmungsfläche**
**32 Primärleiterbogen**
**33 Windungsfläche**
41 Energiequelle
42 Verbraucher
43 Abgriffspunkt

## Patentansprüche

1. Elektrischer Verbraucher
mit Mitteln zu seiner induktiven Versorgung aus einem Primärleiter (1, 2), wobei die Mittel ein Einschiebeteil (3) umfassen,
das lösbar mit dem Verbraucher (3) verbunden ist
und im verbundenen Zustand die induktive Versorgung des Verbrauchers (4) aus dem Primärleiter (1, 2) bewirkt,
wobei das Einschiebeteil (3) Mittel zur lösbaren Aufnahme eines Abschnitts des Primärleiters (1, 2) aufweist,
**wobei am Gehäuse des Verbrauchers (4) eine Ausnehmung (12) ausgeformt ist und dass die lösbare Verbindung des Einschiebeteils (3) mit dem Verbraucher (4) durch Einschieben des Einschiebeteils (3) in die Ausnehmung (12) hergestellt ist,**
**wobei das Einschiebeteil (3) formschlüssig oder kraftschlüssig, insbesondere durch Klemmverbindung, mit dem Verbraucher (4) verbindbar ist, insbesondere in der Ausnehmung (12),**
wobei das Einschiebeteil (3) zumindest teilweise, insbesondere abschnittsweise, gehäusebildend für den Primärleiter (1, 2) ist, **dadurch gekennzeichnet, dass**
**das Einschiebeteil (3) zum Einlegen und Herausnehmen des Primärleiters (1, 2) sich öffnen und schließen lässt, wobei der Abschnitt des Primärleiters zur induktiven Versorgung durch bloßes Öffnen, Umsetzen und Schließen des Einschiebeteils entlang des Primärleiters verschiebbar ist.**

2. Verbraucher nach Anspruch 1,
**dadurch gekennzeichnet, dass**
das Einschiebeteil (3) mindestens zwei Teilbereiche umfasst, die lösbar verbindbar sind.

3. Verbraucher nach Anspruch 1 oder 2,
**dadurch gekennzeichnet, dass**
die beiden Teilbereiche in ihrer relativen räumlichen Lage zueinander veränderbar angeordnet sind, insbesondere klappbar, drehbar und/oder verschiebbar.

4. System,
umfassend zumindest elektrische Verbraucher nach einem der Ansprüche 1 bis 3 und Einschiebeteile, wobei die Verbraucher (4) berührungslos versorgt sind mittels jeweiliger induktiver Kopplung an einen oder mehrere Primärleiter (1, 2),
wobei der Verbraucher (4) derart ausgeführt ist, dass der Primärleiter (1, 2) vom Verbraucher (4) abnehmbar ist,
**wobei der Abgriffspunkt (43) von einem Einschiebeteil (3) umfasst ist, das in einer Ausnehmung (12) des jeweiligen Verbrauchers (4) herausnehmbar angeordnet ist,**
**wobei der Abgriffspunkt (43) entlang des Primärleiters (1, 2) durch bloßes Herausnehmen des Primärleiters (1, 2) aus dem Einschiebeteil (3), Umsetzen des Einschiebeteils (3) und Einlegen des Primärleiters (1, 2) in das Einschiebeteil (3) verschiebbar ist, insbesondere entlang des Primärleiters (1, 2).**

5. System nach Anspruch 4,
**dadurch gekennzeichnet, dass**
mindestens ein Teilabschnitt, insbesondere im Wesentlichen jeder Punkt, des Primärleiters (1, 2) als Abgriffspunkt (43) für die induktive Ankopplung eines Verbrauchers (4) lösbar, insbesondere zerstörungsfrei, verwendbar ist, insbesondere wiederverwendbar.

6. System nach Anspruch 5,
**dadurch gekennzeichnet, dass**
mindestens ein Primärleiter (1, 2) kraftschlüssig oder formschlüssig im Verbraucher (4), insbesondere durch ein Einschiebeteil (3), gehalten ist.

7. Verfahren zum Anschluss eines elektrischen Verbrauchers (4) nach einem der Ansprüche 1 bis 3 an einem System nach einem der Ansprüche 4 bis 6 zur berührungslosen Energieversorgung,
wobei das System zur berührungslosen Energieversorgung einen Primärleiter (1, 2) umfasst, **dadurch gekennzeichnet, dass**
in einem ersten Schritt ein Abschnitt (16, 29, 32) des Primärleiters (1, 2) in ein geöffnetes Einschiebeteil (3) zerstörungsfrei eingelegt wird,
in einem zweiten Schritt das Einschiebeteil (3) geschlossen wird,
in einem dritten Schritt das Einschiebeteil (3) in eine Ausnehmung (12) des Verbrauchers (4) eingeschoben wird.

8. Verfahren nach Anspruch 7 **dadurch gekennzeichnet, dass**
beim Schließen des Einschiebeteils (3) eine Verriegelung erfolgt, insbesondere durch Rastverbindung.

9. Verfahren nach mindestens einem der Ansprüche 7 oder 8, **dadurch gekennzeichnet, dass**
das Einschieben des Einschiebeteils (3) entlang eines Führungsmittels (5) erfolgt, wobei insbesondere die Führungsmittel (5) ein sicherndes Einrasten in der Endposition bewirken.

## Claims

1. Electrical consumer comprising means for inductively supplying power thereto from a primary conductor (1, 2), wherein the means comprise an insertion part (3) which is releasably connected to the consumer (4) and which, in the connected state, brings about the inductive supply of power to the consumer (4) from the primary conductor (1, 2), wherein the insertion part (3) has means for releasably receiving a section of the primary conductor (1, 2), wherein a recess (12) is formed on the housing of the consumer (4), and in that the releasable connection of the insertion part (3) to the consumer (4) is established by inserting the insertion part (3) in the recess (12), wherein the insertion part (4) can be connected to the consumer (4), in particular in the recess (12), with a form fit or with a force fit, in particular by a clamping connection, wherein the insertion part (3) at least partially, in particular in some sections, forms a housing for the primary conductor (1, 2), **characterized in that** the insertion part (3) can be opened and closed for the placement and removal of the primary conductor (1, 2), wherein the section of the primary conductor for inductively supplying power can be shifted along the primary conductor simply by opening, repositioning and closing the insertion part.

2. Consumer according to claim 1, **characterized in that** the insertion part (3) comprises at least two sub-regions which can be releasably connected.

3. Consumer according to claim 1 or 2, **characterized in that** the two sub-regions, in terms of their relative spatial position with respect to one another, are arranged in a variable manner, in particular such as to be able to be folded, rotated and/or shifted.

4. System comprising at least electrical consumers according to one of claims 1 to 3 and insertion parts, wherein the consumers (4) are supplied with power in a contactless manner by means of respective inductive coupling to one or more primary conductors (1, 2), wherein the consumer (4) is designed in such a way that the primary conductor (1, 2) can be removed from the consumer (4), wherein the tapping point (43) is comprised of an insertion part (3) which is removably arranged in a recess (12) of the respective consumer (4), wherein the tapping point (43) can be shifted along the primary conductor (1, 2) simply by removing the primary conductor (1, 2) from the insertion part (3), repositioning the insertion part (3) and placing the primary conductor (1, 2) in the insertion part (3), in particular along the primary conductor (1, 2).

5. System according to claim 4, **characterized in that** at least one sub-section, in particular substantially any point, of the primary conductor (1, 2) can be used, in particular reused, as a tapping point (43) for the inductive coupling of a consumer (4) in a releasable manner, in particular non-destructively.

6. System according to claim 5, **characterized in that** at least one primary conductor (1, 2) is held in the consumer (4) with a force fit or with a form fit, in particular by an insertion part (3).

7. Method for connecting an electrical consumer (4) according to one of claims 1 to 3 to a system according to one of claims 4 to 6 for supplying energy in a contactless manner, wherein the system for supplying energy in a contactless manner comprises a primary conductor (1, 2), **characterized in that**
in a first step a section (16, 29, 32) of the primary conductor (1, 2) is placed non-destructively in an open insertion part (3),
in a second step the insertion part (3) is closed,
in a third step the insertion part (3) is inserted in a recess (12) of the consumer (4).

8. Method according to claim 7, **characterized in that**, when the insertion part (3) is closed, a locking takes place, in particular by means of a latching connection.

9. Method according to at least one of claims 7 or 8, **characterized in that** the insertion of the insertion part (3) takes place along a guide means (5), wherein in particular the guide means (5) bring about secure latching in the end position.

## Revendications

1. Appareil consommateur électrique
doté de moyens dévolus à son alimentation par induction à partir d'un conducteur primaire (1, 2),
lesdits moyens incluant une pièce insérable (3)
reliée amoviblement à l'appareil consommateur (4)
et provoquant, à l'état connecté, l'alimentation dudit appareil consommateur (4) par induction, à partir dudit conducteur primaire (1, 2),
ladite pièce insérable (3) étant pourvue de moyens conçus pour recevoir, de manière libérable, un tronçon dudit conducteur primaire (1, 2),
un évidement (12) étant pratiqué dans le carter de l'appareil consommateur (4) et la liaison amovible de ladite pièce insérable (3), avec ledit appareil consommateur (4), étant instaurée par insertion de ladite pièce insérable (3) dans ledit évidement (12),
ladite pièce insérable (3) pouvant être reliée audit appareil consommateur (4) par complémentarité de formes ou par engagement positif, en particulier par une liaison par coincement notamment instaurée dans ledit évidement (12),
ladite pièce insérable (3) formant au moins en partie, notamment par zones, un boîtier dédié audit conducteur primaire (1, 2),
**caractérisé par le fait que**
la pièce insérable (3) peut être ouverte et fermée en vue de l'introduction et de l'extraction du conducteur primaire (1, 2),
sachant que le tronçon dudit conducteur primaire affecté à l'alimentation par induction peut être déplacé par simples ouverture, transposition et fermeture de ladite pièce insérable, le long dudit conducteur primaire.

2. Appareil consommateur selon la revendication 1,
**caractérisé par le fait que**
la pièce insérable (3) comprend au moins deux régions partielles pouvant être reliées de manière libérable.

3. Appareil consommateur selon la revendication 1 ou 2,
**caractérisé par le fait que**
les deux régions partielles sont agencées de façon telle que les positions relatives, qu'elles occupent dans l'espace, puissent être modifiées en particulier par rabat pivotant, par rotation et/ou par coulissement.

4. Système comprenant au moins des appareils consommateurs électriques conformes à l'une des revendications 1 à 3, et des pièces insérables, lesdits appareils consommateurs (4) étant alimentés sans contact, par couplage inductif respectif à un ou plusieurs conducteur(s) primaire(s) (1, 2),
l'appareil consommateur (4) étant réalisé de telle sorte que le conducteur primaire (1, 2) puisse être dissocié d'avec ledit appareil consommateur (4),
le point de prélèvement (43) étant englobé par une pièce insérable (3) logée, avec faculté d'extraction, dans un évidement (12) de l'appareil consommateur (4) considéré,
ledit point de prélèvement (43) pouvant être déplacé le long du conducteur primaire (1, 2) par simples extraction dudit conducteur primaire (1, 2) hors de la pièce insérable (3), transposition de ladite pièce insérable (3) et introduction dudit conducteur primaire (1, 2) dans ladite pièce insérable (3), en particulier le long dudit conducteur primaire (1, 2).

5. Système selon la revendication 4,
**caractérisé par le fait**
**qu'**au moins un tronçon partiel, en particulier pour l'essentiel chaque point du conducteur primaire (1, 2) matérialisant un point de prélèvement (43) dévolu au couplage inductif d'un appareil consommateur (4), est utilisable et notamment réutilisable avec faculté de dissociation, en particulier de manière non destructive.

6. Système selon la revendication 5,
**caractérisé par le fait**
**qu'**au moins un conducteur primaire (1, 2) est retenu dans l'appareil consommateur (4) par engagement positif ou par complémentarité de formes, en particulier par l'intermédiaire d'une pièce insérable (3).

7. Procédé de raccordement d'un appareil consommateur électrique (4), conforme à l'une des revendications 1 à 3, à un système conforme à l'une des revendications 4 à 6, en vue de l'alimentation en énergie sans contact,
ledit système incluant un conducteur primaire (1, 2) dévolu à l'alimentation en énergie sans contact,
**caractérisé par le fait que**,
lors d'une première étape, un tronçon (16, 29, 32) du conducteur primaire (1, 2) est introduit, de manière non destructive, dans une pièce insérable (3) ouverte,
lors d'une deuxième étape, ladite pièce insérable (3) est fermée,
lors d'une troisième étape, ladite pièce insérable (3) est insérée dans un évidement (12) de l'appareil consommateur (4).

8. Procédé selon la revendication 7,
**caractérisé par le fait**
**qu'**un verrouillage s'opère, notamment par liaison encliquetée, lors de la fermeture de la pièce insérable (3).

9. Procédé selon au moins l'une des revendications 7 ou 8,
**caractérisé par le fait que**
l'insertion de la pièce insérable (3) a lieu le long d'un moyen de guidage (5),
les moyens de guidage (5) provoquant, en particulier, un encliquetage à effet d'arrêt à l'emplacement définitif.
